(19) Europäisches Patentamt
European Patent Office
Office européen des brevets

(11) EP 2 757 683 A1

(12) **EUROPEAN PATENT APPLICATION**

(43) Date of publication:
**23.07.2014 Bulletin 2014/30**

(51) Int Cl.:
**H02P 21/06** (2006.01)

(21) Application number: **13000278.5**

(22) Date of filing: **21.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Danfoss Power Electronics A/S
6300 Gråsten (DK)**

(72) Inventors:
• **Kjaer, Ana Mari Tataru
24955 Harrislee (DE)**

• **Delpino, Hernan Andres Miranda
6400 Soenderborg (DK)**

(74) Representative: **Whiting, Gary
Danfoss A/S
Intellectual Property Department
L25
Nordborgvej 81
6430 Nordborg (DK)**

(54) **Determining inductances in synchronous machines**

(57)    The present invention provides a method for determining axis inductances $L_d$ and $L_q$ in a synchronous machine. A number of pulses are applied to a machine under test and current and voltage data for each pulse are recorded. A mathematical model for expressing the average inductance ($L_A$) and the variable inductance ($L_B$), each as a function of the direct and quadrature currents ($i_d$ and iq) is provided. The axis inductances are determined from the average and variable inductances.

Fig. 3

**Description**

FIELD OF THE INVENTION

The present invention relates to determining inductances in a synchronous machine. In particular, the present invention relates to determining the axis inductances ($L_d$ and $L_q$) and the variation of those inductances with direct current and quadrature current ($i_d$ and $i_q$).

BACKGROUND OF THE INVENTION

A synchronous motor is a motor in which the frequency of rotation of the motor is identical to the frequency of the AC current applied to the motor. Synchronous motors typically have high efficiency, but often suffer from a number of practical problems, such as being difficult to start if the motor parameters are not known with sufficient accuracy. Examples of synchronous motors include permanent magnet motors and synchronous reluctance motors.

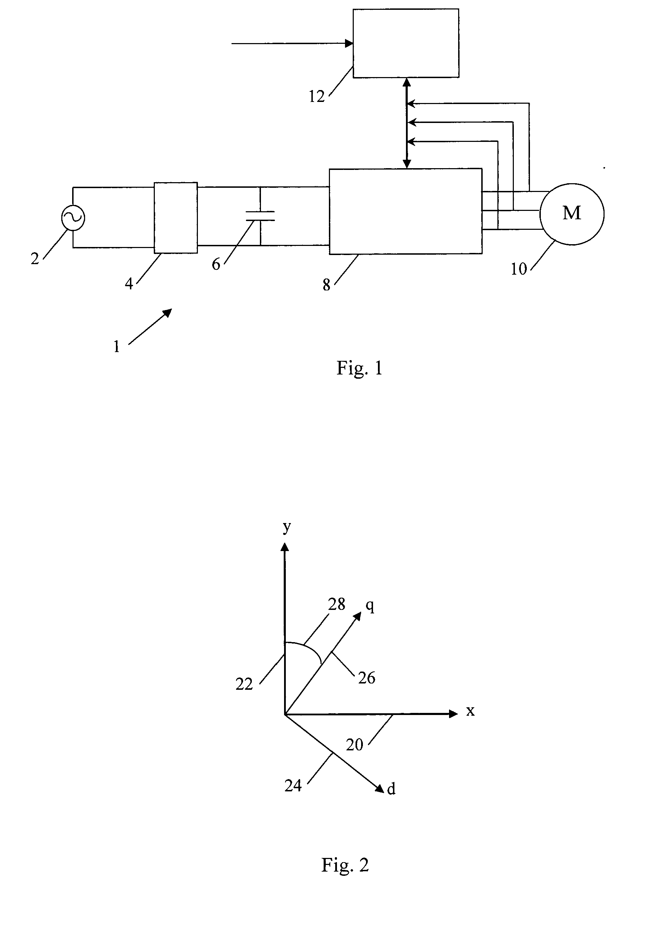

Figure 1 is a block diagram of a motor system, indicated generally by the reference numeral 1. The motor system 1 comprises an AC power source 2, a rectifier 4, a DC link capacitor 6, an inverter module 8, a three-phase synchronous motor 10 and a controller 12.

As is well known in the art, the rectifier 4 converts AC electrical power provided by the AC power source 2 into a DC source at the DC link capacitor 6. The inverter module 8 comprises a number of switching elements, typically insulated gate bipolar transistors (IGBTs), that are used to convert the DC signal at the DC link capacitor 6 into three AC signals that are provided to each of the phases of the motor 10. The controller 12 provides switching instructions for each of the switching elements of the inverter module 8. Thus, the controller 12 is able to precisely control the frequency and phase of each of the signals provided to the motor 10. As shown in Figure 1, the controller receives information (typically current data) regarding the signals provided on each of the three phase inputs to the motor as well as receiving an input, possibly from a user, regarding a desired motor output.

In order to enable the controller 12 to accurately control the motor, it is necessary for the controller 12 to take into account the electromagnetic properties of the motor 10. One method for providing the controller with data relating to such electromagnetic properties is to use data sheet information relating to the motor 10. However, even when this information is available, it is often insufficiently precise and accurate to enable accurate and efficient control of the motor 10.

An alternative to using data sheet information is to measure the characteristics of the motor itself. For example, it is known to use the controller 12 to control the injection of signals into the motor 10, to monitor the response to those signals and to estimate various resistances and inductances of the motor 10 on the basis of those responses.

Figure 2 shows two co-ordinate systems used in modelling and controlling the motor 10.

The first co-ordinate system is the x-y co-ordinate system comprising an x-axis 20 and a y-axis 22. The x-y co-ordinate system represents the rotating magnetic field that is created by the stator of the synchronous motor 10. The x-y system rotates with the rotating frequency $\omega$ of the driving shaft of the motor 10.

The second co-ordinate system is the d-q co-ordinate system comprising a d-axis 24 and a q-axis 26. The d-q co-ordinate system rotates with the rotating frequency of the rotating rotor of the motor 10. For a synchronous machine, this is the same frequency ($\omega$) as the x-y co-ordinate system. If a load is applied to the rotating rotor of the electric motor 10, a shift between the x-y co-ordinate system and the d-q co-ordinate system occurs. This shift is shown in Figure 2 as a load angle 28 between the y-axis 22 and the q-axis 26.

It is known that accurate models for d- and q-axis inductances are important for the reliability of some control mechanisms for a synchronous machine, such as the motor 10. It is also known that the d-axis inductance ($L_d$) and the q-axis inductance ($L_q$) vary as functions of both the d-axis current ($i_d$) and the q-axis current ($i_q$). Modelling $L_d(i_d, i_q)$ and $L_q(i_d, i_q)$ with a sufficient degree of accuracy has proved to be difficult.

Many existing methods for determining the electrical and magnetic properties of a motor by injecting signals into the motor and monitoring responses require the motor 10 to rotate. With the motor 10 installed within a system, this may be undesirable. It would therefore be advantageous in some circumstances to enable such data to be obtained with the motor at standstill. Modelling $L_d(i_d, i_q)$ and $L_q(i_d, i_q)$ with a sufficient degree of accuracy for a motor that is kept at standstill has proved to be challenging.

Moreover, some known methods for determining the d-axis inductance ($L_d$) and the q-axis inductance ($L_q$) as functions of both the d-axis current ($i_d$) and the q-axis current ($i_q$) are slow. It would be advantages to be able to provide a fast, accurate method.

The present invention seeks to address at least some of the problems outlined above.

SUMMARY OF THE INVENTION

The present invention provides a method comprising: applying a plurality of voltage pulses to a synchronous motor (typically a 3-phase synchronous motor, although this is not essential to all embodiments of the invention); taking a plurality of current and voltage samples in at least two phases (typically all phases) of the motor in response to the application of each voltage pulse; using the plurality of current and voltage samples to generate mathematical expressions for average inductance and variable inductance of the synchronous motor as functions of d-axis and q-axis currents; and using the generated mathematical expressions for average inductance and variable inductance of the synchronous motor to generate mathematical expressions for d-axis inductance and q-axis inductance of the synchronous motor as functions of d-axis and q-axis currents.

The mathematical expressions for d-axis inductance and q-axis inductances of the synchronous motor are typically generated using the formulae $L_d = \frac{3}{2}(L_A - L_B)$ and $L_q = \frac{3}{2}(L_A + L_B)$, wherein $L_A$ is the generated average inductance, $L_B$ is the generated variable inductance, $L_d$ is the d-axis inductance and $L_q$ is the q-axis inductance.

The mathematical expressions for average inductance and variable inductance of the synchronous motor may be generated from the current and voltage samples and from mathematical models of self-inductance and mutual-inductance in electric motors.

The mathematical expressions for average inductance and variable inductance of the synchronous motor may comprise an equivalent machine in which the same current exists in all phases of the equivalent machine at all times. Such an equivalent machine is not a real machine: it is a mathematical construct that allows the voltage equations describing the operation of the motor to be solved in order to arrive at expressions for the d-axis and q-axis inductances of the synchronous machine.

The method may define fictive inductances of the equivalent machine that can be expressed in terms of only the average inductance and variable inductance of the synchronous motor as functions of d-axis and q-axis currents and terms that can be determined from the current and voltage samples. A negligible term of the equivalent machine definition may be omitted in order to achieve this. The leakage inductance may be neglected in order to allow the relevant equations to be uniquely solved.

The method may further comprise estimating a value for the fictive inductance at each sampling time such that estimates for the average inductance and the variable inductance of the synchronous motor can be calculated from current and voltage samples of a positive voltage pulse and a negative voltage pulse applied at an arbitrary rotor angle of the synchronous motor. In one embodiment of the invention, the arbitrary rotor angle is a phase of the synchronous motor, but this is not essential to all embodiments of the invention.

The method may include solving the mathematical expressions for average inductance and variable inductance in order to determine the mathematical expressions for d-axis inductance and q-axis inductance of the synchronous motor as functions of d-axis and q-axis currents.

The synchronous motor includes a rotor and the method may include applying the voltage pulses such that a rotor of the synchronous motor does not move. Thus, the method may be used with the motor in standstill. This has many practical advantages when seeking to determine various characteristics of a motor under test.

The plurality of voltage pulses may comprise positive measuring pulses and negative measuring pulses applied to phases of the synchronous motor. For example, a positive measuring pulse may be applied to one phase and negative pulses applied to the other phases. Similarly, a negative measuring pulse may be applied to one phase and positive pulses applied to the other phases. It should be noted that applying both positive and negative voltage pulses enables average inductances to be determined, thereby removing the effects of hysteresis from the inductance calculations. It should also be noted that alternative arrangements are possible (including applying positive and negative pulses that are not aligned with a particular phase of the motor).

As described above, multiple voltage and current samples are obtained for each of the applied voltage pulses. In a preferred form of the invention, multiple voltage and current samples are taken for each positive measuring pulse applied and for each negative measuring pulse applied.

In some forms of the invention, following the application of a measuring pulse to the motor, a cancelling pulse having an opposite sign to the applied measuring pulse is applied. Current and voltage samples need not be taken for the cancelling pulses.

Thus, following a positive measuring pulse, a negative cancelling pulse may be applied: following a negative measuring pulse, a positive cancelling pulse may be applied. This typically happens for all applied pulses, thereby largely cancelling the residual magnetic effects of the applied pulse. As noted above, a positive measuring pulse may include a positive voltage pulse on a first phase and a negative voltage pulse on other phases; a negative cancelling pulse may include a negative voltage pulse on the first phase and a positive voltage pulse on the other phases.

In many forms of the invention, following the application of a voltage pulse and a cancelling pulse, there is a short delay before another pulse is applied to the motor. Thus, a series of pulses for a particular phase may comprise a positive measuring pulse, a negative cancelling pulse, a short delay, a negative measuring pulse and a positive cancelling pulse. This sequence may then be repeated for other (typically all) phases of the synchronous motor. (As noted elsewhere, pulses do not necessarily need to be applied to particular phases of the synchronous motor - other selections of angles are possible.)

The mathematical expressions for average inductance and variable inductance of the synchronous motor may be generated using average responses as a result of applying positive and negative voltage pulses to a defined phase of the motor (or some other defined angle). The defined phase may be selected arbitrarily. Alternatively, the defined phase may be selected based on the position of the rotor of the synchronous motor. In alternative forms of the invention, pulses could be applied in large numbers of directions, or in a few arbitrary (random) directions. The invention is not limited to sending pulses in any given direction.

The method may further comprise determining rotor position for the synchronous machine on the basis of current and voltage samples obtained for all phases of the synchronous motor.

BRIEF DESCRIPTION OF THE DRAWINGS

The invention will now be described in further detail with reference to the following schematic drawings, in which:

Figure 1 is a block diagram of synchronous motor control system;
Figure 2 is a vector diagram showing the relationship between x-y and d-q co-ordinate systems of the motor control system;
Figure 3 is a flow chart showing an algorithm in accordance with an aspect of the present invention;
Figure 4 is a vector diagram of a three-phase motor;
Figure 5 is a vector diagram of a three-phase motor;
Figure 6 is a vector diagram showing pulses that are applied to a motor in accordance with an embodiment of the invention;
Figure 7 shows the application of pulses to one phase of a motor under test in accordance with an embodiment of the invention;
Figure 8 is a plot of magnetic flux and current; and
Figure 9 is a graph showing self-inductance between three phases of a three phase motor.

DETAILED DESCRIPTION OF THE INVENTION

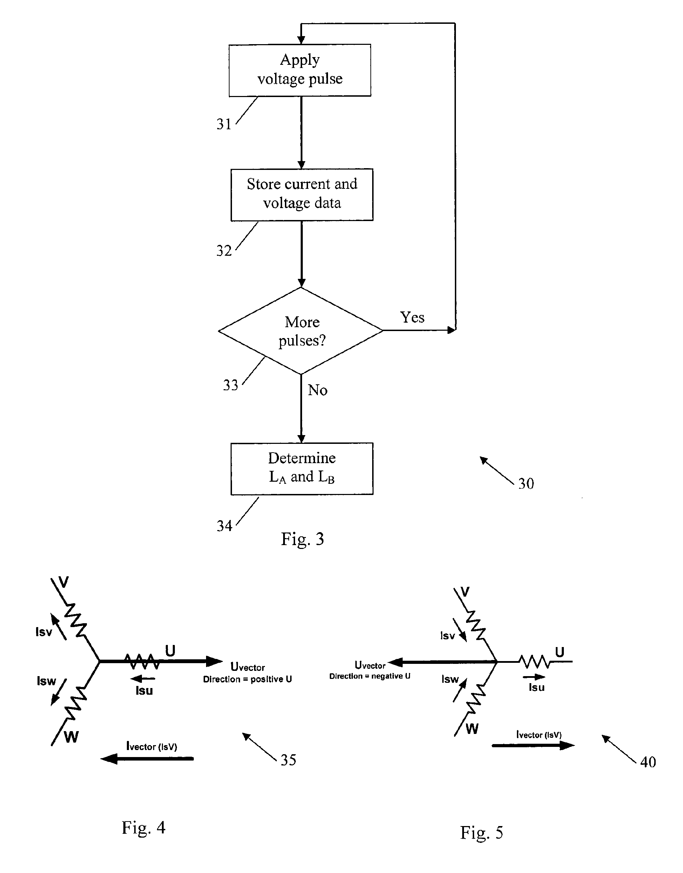

Figure 3 is a flow chart of an algorithm, indicated generally by the reference numeral 30, in accordance with an aspect of the present invention. The algorithm 30 starts at step 31, where a voltage pulse is applied to the motor. As described in detail below, pulses are provided in turn to each of the three phases of the three-phase synchronous motor under test.

Figure 4 is a vector diagram, indicated generally by the reference numeral 35, of an exemplary 3-phase motor. The three phases of the motor are labelled u, v and w. In the vector diagram 35, a positive u-phase current vector ($I_{su}$) is generated by applying a positive U voltage vector (indicating that a current flows into the motor through the u-phase connection). As shown in Figure 4, if a current flows into the motor through the u-phase connection, then currents must flow out of the motor through the v- and w-phases of the motor (such that negative current vectors $I_{sv}$ and $I_{sw}$ are provided).

Similarly, Figure 5 is a vector diagram, indicated generally by the reference numeral 40, of the 3-phase motor in which a negative u-phase current vector is generated by applying a negative U voltage vector (indicating that a current flows out of the motor through the u-phase connection). As shown in Figure 5, if a current flows out of the motor through the u-phase connection, then currents typically (although not necessarily) flow into the motor through the v- and w-phases of the motor (such that positive current vectors $I_{sv}$ and $I_{sw}$ are provided).

It should be noted that the invention is described with reference to three-phase motors by way of example only. The principles of the invention could be applied to motors with any number of phases.

In response to the voltage pulse applied at step 31 of the algorithm 30, currents are induced in the motor. The currents in each phase of the motor are measured and a series of voltage and current measurements are stored at step 32 of the algorithm 30.

At step 33 of the algorithm 30, it is determined whether further pulses remain to be applied to the motor. If so, the algorithm 30 returns to step 31. If all pulses have been applied, the algorithm moves to step 34.

When a current is passed through an inductor (such as one of the three phases of a motor), a voltage is induced in that inductor. This voltage is generated by self-induction. Similarly, a current passing through an inductive load induces voltages in other nearby inductive loads by mutual-induction.

Refer to Figure 4. When the positive U-phase voltage vector is applied to the motor (which requires applying a positive u-phase voltage and appropriate negative v-phase and w-phase voltages), a positive u-phase current vector is generated in the motor (comprising a positive u-phase current $I_{su}$ and appropriate negative v-phase and w-phase currents). As a result of the current $I_{su}$ flowing in the u-phase of the motor, a voltage is induced in the U-phase of the motor through self-induction and voltages are induced in the V-phase and W-phase of the motor through mutual-induction. The induced voltage appears in addition to the applied u-phase voltage. In a similar manner, voltages are induced in response to the currents generated in the v-phase and the w-phase of the motor.

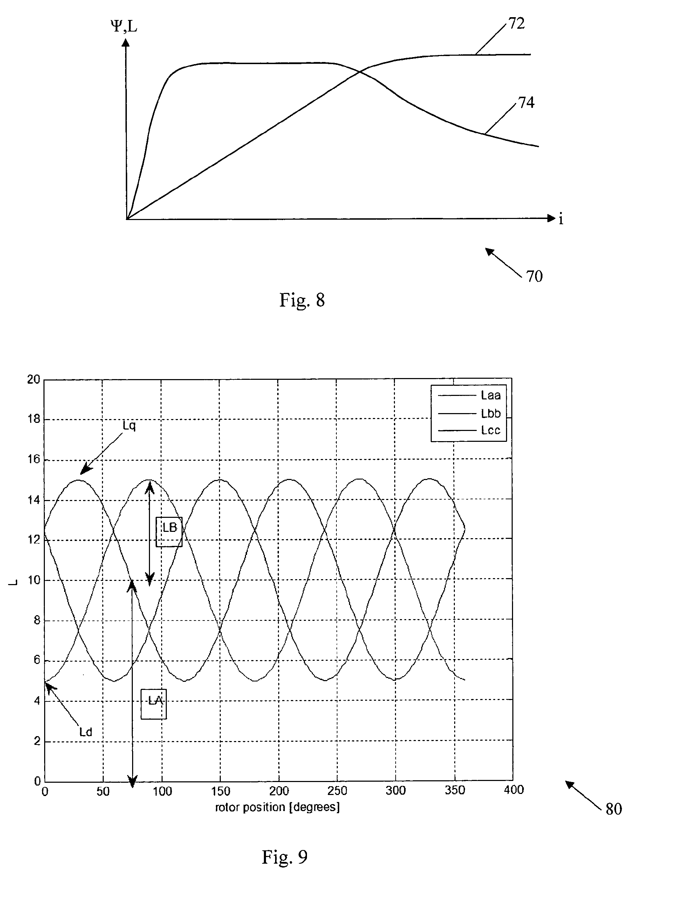

Self-inductance is dependent on the position of the rotor of the synchronous motor. Figure 9 is a graph, indicated generally by the reference numeral 80, that shows how self-inductance in each of the phases of the motor varies with rotor position. The self-inductance may be approximated by a sinusoid with a constant offset. The offset is referred to as the average inductance (and is labelled $L_A$ in Figure 9). The amplitude of the sinusoidal part of the curve is (labelled $L_B$ in Figure 9) is referred to as the variable inductance.

At step 34 of the algorithm 30, the data stored at step 32 is used to determine the average inductance ($L_A$) and variable inductance ($L_B$) of the motor 10 as a function of d-axis current ($i_d$) and q-axis current ($i_q$), thereby providing $L_A(i_d,i_q)$ and $L_B(i_d,i_q)$.

In the theory of electrical machines, it is shown that the quadrature axis inductances ($L_d$ and $L_q$) can be expressed as functions of the average inductance ($L_A$) and the variable inductance ($L_B$) as follows:

$$L_d = \frac{3}{2}(L_A - L_B);$$

and

$$L_q = \frac{3}{2}(L_A + L_B).$$

Accordingly, the axis inductances that are so useful for motor control can readily be determined if $L_A$ and $L_B$ are known. However, as indicated above $L_A$ and $L_B$ both vary with applied current, and so determining $L_A$ and $L_B$ over a range of data points in not simple.

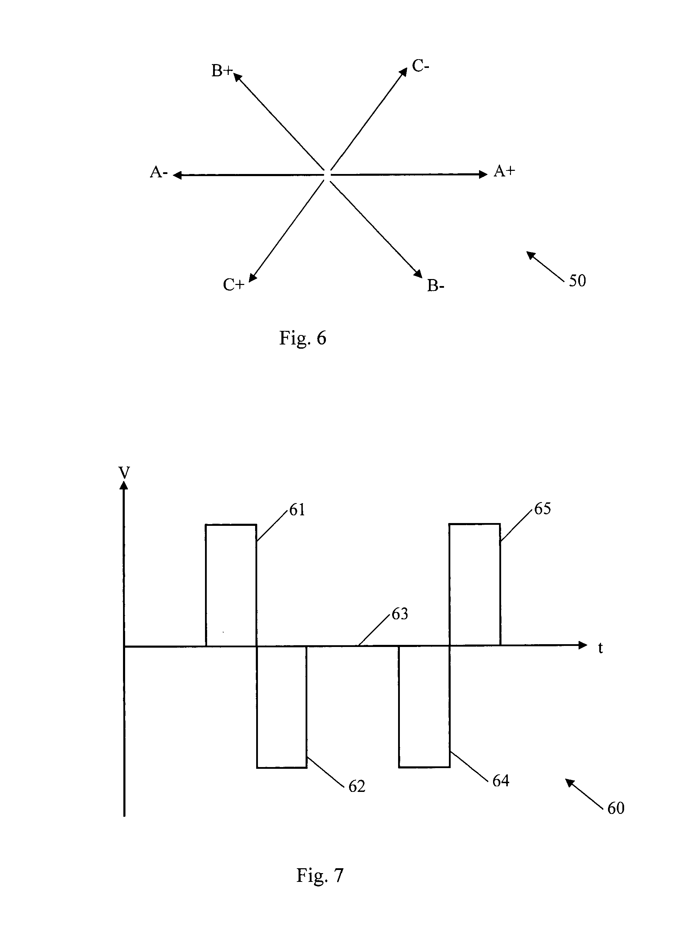

In step 31 of the algorithm 30, a number of voltage pulses are applied to the motor under test. Figure 6 is a vector diagram showing pulses that are applied to the motor in one embodiment of the invention. The pulses shown in Figure 6 are labelled A+, A-, B+, B-, C+ and C- and might be applied in that order. It should be noted that, as described further below, it is not always necessary to apply pulses to all of those phases since applying positive and negative pulses to a single phase if often sufficient to enable d-axis and q-axis inductances to be determined (actually, if by chance the rotor magnets are aligned with a particular phase, no information will be obtained for one of $L_d$ and $L_q$ - accordingly, at least two pulse directions are required to be sure of detecting $L_d$ and $L_q$.) Nevertheless, the data obtained from applying all of these pulses can be used for other purposes, such as determining the rotor position. Indeed, an advantage of the present invention is that these pulses are often already being applied for these other purposes, such that the data required to determine the d-axis and q-axis inductances in the manner described herein is already available.

To apply a pulse A+ to the a-phase of the motor under test (which may be the same as the u-phase described above with reference to Figures 4 and 5), a positive voltage pulse is applied to the a-phase and suitable negative voltage pulses applied to the b-phase and the c-phase. To apply a pulse A- to the a-phase of the motor under test, a negative voltage pulse is applied to the a-phase and suitable positive voltage pulses applied to the b-phase and the c-phase. Similarly, to apply a pulse B+ to the b-phase of the motor under test (which may be the same as the v-phase described above with reference to Figures 4 and 5), a positive voltage pulse is applied to the b-phase and suitable negative voltage pulses applied to the a-phase and the c-phase and to apply a pulse B- to the b-phase of the motor under test, a negative voltage pulse is applied to the b-phase and suitable positive voltage pulses applied to the a-phase and the c-phase. Finally, to apply a pulse C+ to the c-phase of the motor under test (which may be the same as the w-phase described above with reference to Figures 4 and 5), a positive voltage pulse is applied to the c-phase and suitable negative voltage pulses applied to the a-phase and the b-phase and to apply a pulse C- to the c-phase of the motor under test, a negative voltage pulse is applied to the c-phase and suitable positive voltage pulses applied to the a-phase and the b-phase.

Figure 7 is a graph, indicated generally by the reference numeral 60, showing the application of exemplary pulses A+ and A-. First, a positive voltage is applied to the a-phase of the motor under test. This positive voltage signal is indicated by the reference numeral 61. At the same time, corresponding negative pulses (not shown) are applied to the b-phase and c-phase of the motor. During the application of the pulse 61, a plurality of voltage and current samples are taken in each of the three phases of the motor (providing the data A+). As indicated above, the voltage and current measurements are recorded in step 32 of the algorithm 30.

Next, a negative voltage pulse 62 is applied to the a-phase of the motor under test. The application of the negative voltage pulse 62 is not used for measurement purposes, but is used to cancel the effects of the application of the first pulse 61 on the motor under test. Of course, applying the negative voltage pulse to the a-phase requires the application of suitable positive pulses to the b-phase and c-phase of the motor.

After the pulse 62 is applied, there is a short delay (indicated generally by the reference numeral 63) before a further negative pulse 64 is applied to the a-phase of the motor. At the same time, corresponding positive pulses (not shown) are applied to the b-phase and c-phase of the motor. During the application of the pulse 64, a plurality of voltage and current samples are taken in each of the three phases of the motor and are stored (such that the data A- is stored).

Finally, a positive voltage pulse 65 is applied to the a-phase of the motor under test. In a similar manner to the pulse 62, the application of the positive voltage pulse 65 is used to cancel the effects of the application of the further negative pulse 64 on the motor under test.

Figure 7 is a graph showing the application of pulses A+ and A-. Pulses B+ and B- are applied in a similar manner to the B-phase of the motor under test and pulses C+ and C- are applied to the C-phase of the motor under test. In this manner, a substantial quantity of voltage and current data is stored for the motor in the various instances of the step 32 of the algorithm 30.

The present invention seeks to determine inductances in the motor 10. Inductance is given by magnetic flux divided by current. A known complication is that magnetic flux in many materials, including iron, displays hysteresis, such that the magnetic flux recorded when current is increasing is less than the magnetic flux recorded when current is decreasing. For this reason, positive and negative voltage pulses are provided (leading to both increasing and decreasing current levels). The responses to the positive and negative pulses are averaged, thereby eliminating the effect of the hysteresis.

Figure 8 is a plot of magnetic flux and current averaged over a positive and a negative pulse. As shown by the magnetic flux curve 72, as the current in the motor increases, magnetic saturation occurs, leading to a non-linear curve. Inductance is given by magnetic flux divided by current and so, as shown by the plot 74 in Figure 8, inductance varies with current. The non-linearity of inductances caused by the magnetic saturation must be included in motor models if they are to be sufficiently accurate to control synchronous motors. The present invention seeks to model and understand this non-linearity.

The various pulses applied to the motor (A+, A-, B+, B-, C+ and C-) allow a great deal of data to be stored in step 32 of the algorithm 30 described above. If the angles between the d-q co-ordinate system and the motor axes is known, then for each pulse applied to the motor, the d-axis and q-axis inductance can readily be determined. For example, the d-axis inductance for a particular pulse is given by the d-axis magnetic flux divided by the d-axis current.

Using the large data set stored in the various instances of the step 32 of the algorithm 30, it would be possible to determine $L_d$ and $L_q$ for a range of $i_d$ and $i_q$. This data could be plotted and used to estimate $L_d$ and $L_q$ for unplotted levels of $i_d$ and $i_q$.

Although possible, such a method is computationally intensive and therefore time consuming. Moreover, the method for estimating $L_d$ and $L_q$ for an unmeasured value of $i_d$ and $i_q$ can be cumbersome. The present invention seeks to provide a fast method for generating mathematical expressions for $L_d(i_d,i_q)$ and $L_q(i_d,i_q)$, thereby addressing many of the problems with known methodologies.

The present invention exploits mathematical models of self-inductance and mutual-inductance in electric motors to develop a mathematical expression for $L_d(i_d,i_q)$ and $L_q(i_d,i_q)$.

The effect of self-induction and mutual-induction is synchronous motors is well understood and is given by the following formulae:

$$Laa(\theta) = L_{ls} + L_A - L_B \cdot \cos(2 \cdot \theta)$$

$$Lbb(\theta) = L_{ls} + L_A - L_B \cdot \cos\left(2 \cdot \left(\theta - \frac{2 \cdot \pi}{3}\right)\right)$$

$$Lcc(\theta) = L_{ls} + L_A - L_B \cdot \cos\left(2 \cdot \left(\theta - \frac{4 \cdot \pi}{3}\right)\right)$$

$$Lab(\theta) = -\frac{L_A}{2} - L_B \cdot \cos\left(2 \cdot \left(\theta + \frac{2 \cdot \pi}{3}\right)\right)$$

$$Lbc(\theta) = -\frac{L_A}{2} - L_B \cdot \cos(2 \cdot \theta)$$

$$Lca(\theta) = -\frac{L_A}{2} - L_B \cdot \cos\left(2 \cdot \left(\theta - \frac{2 \cdot \pi}{3}\right)\right)$$

2

where $L_{ls}$ is the leakage inductance, Lxx (where x is a, b or c) refers to self-inductance and Lxy refers to mutual inductance (where x and y are a, b or c). $\theta$ is the rotor position.

In a synchronous motor system, the leakage inductance ($L_{ls}$) approximates to zero (this assumption is made in the calculations below in order to make them solvable), which can be used to simplify the equations for mutual- and self-inductance considerably.

As indicated above, in step 34 of the algorithm 30, the inductances $L_A$ and $L_B$ are determined.

The first step is to estimate $L_A$ and $L_B$ as function of phase current or quadrature current. To do this the voltage equations of the motor are written in a form of per unit system.

It is known that voltage, U is given by: $U = R.i + \dfrac{\delta\varphi}{\delta t}$

For a three-phase motor at standstill, this can be expressed as follows:

$$\begin{bmatrix} kU_{a[k]} \cdot u_{[k]} \\ kU_{b[k]} \cdot u_{[k]} \\ kU_{c[k]} \cdot u_{[k]} \end{bmatrix}_{[pulse]} = \begin{bmatrix} Rs & 0 & 0 \\ 0 & Rs & 0 \\ 0 & 0 & Rs \end{bmatrix} \cdot \begin{bmatrix} kI_{a[k]} \cdot i_{[k]} \\ kI_{b[k]} \cdot i_{[k]} \\ kI_{c[k]} \cdot i_{[k]} \end{bmatrix}_{[pulse]} + \frac{d}{dt} \left\{ \begin{bmatrix} Laa & Lab & Lac \\ Lab & Lbb & Lbc \\ Lac & Lbc & Lcc \end{bmatrix} \cdot \begin{bmatrix} kI_{a[k]} \cdot i_{[k]} \\ kI_{b[k]} \cdot i_{[k]} \\ kI_{c[k]} \cdot i_{[k]} \end{bmatrix}_{[pulse]} \right\} \quad 3$$

Where

- [k] is the sample number.
- [pulse] is the pulse selected for calculation of $L_d$ and $L_q$. It would be possible to select the pulse used for the calculation of $L_d$ and $L_q$ based on the position of the rotor, but this is not essential to the present invention. Generally, the pulse is selected arbitrarily.
- u and i are the phase voltage and current selected as reference (uref can be any of the three phases-a,b,c). Again, the selection of the phase is generally arbitrary.
- $R_s$ is the phase resistance.
- $L_{xy}$ are the self and mutual inductances (x, y=a,b,c).
- $kU_x$, is ratio of the voltage of phase x to the reference voltage ($U_x/U_{ref}$).

$$[kU]_{[k,pulse]} = [kU_a \quad kU_b \quad kU_c]_{[k,pulse]} = \begin{bmatrix} \dfrac{u_{a[k]}}{u_{[k]}} & \dfrac{u_{b[k]}}{u_{[k]}} & \dfrac{u_{c[k]}}{u_{[k]}} \end{bmatrix}_{[pulse]} \qquad 4$$

- $kI_x$ is the ratio of the phase x to the reference current $i_{ref}$ (x=a,b,c):

$$[kI]_{[k,pulse]} = [kI_a \quad kI_b \quad kI_c]_{[k,pulse]} = \begin{bmatrix} \dfrac{i_{a[k]}}{i_{[k]}} & \dfrac{i_{b[k]}}{i_{[k]}} & \dfrac{i_{c[k]}}{i_{[k]}} \end{bmatrix}_{[pulse]} \qquad 5$$

The equation (3) above for a three-phase motor can be re-written as follows:

$$\begin{bmatrix} kU_{a[k]} \\ kU_{b[k]} \\ kU_{c[k]} \end{bmatrix}_{[pulse]} \cdot u_{[k,pulse]} = \begin{bmatrix} Rs\cdot kI_{a[k]} \\ Rs\cdot kI_{b[k]} \\ Rs\cdot kI_{c[k]} \end{bmatrix}_{[pulse]} \cdot i_{[k,pulse]} + \frac{d}{dt}\left\{ \begin{bmatrix} Laa\cdot kI_{a[k]} + Lab\cdot kI_{b[k]} + Lac\cdot kI_{c[k]} \\ Lab\cdot kI_{a[k]} + Lbb\cdot kI_{b[k]} + Lbc\cdot kI_{c[k]} \\ Lac\cdot kI_{a[k]} + Lbc\cdot kI_{b[k]} + Lcc\cdot kI_{c[k]} \end{bmatrix}_{[pulse]} \cdot i_{[k,pulse]} \right\} \qquad 6$$

In a more contracted form the system of voltage equations at standstill may be written as follows:

$$[kU]_{[k,pulse]} \cdot u_{[k,pulse]} = [kI]_{[k,pulse]} \cdot R_s \cdot i_{[k,pulse]} + \frac{d}{dt}\left\{ \begin{bmatrix} L_{a[k]} \\ L_{b[k]} \\ L_{c[k]} \end{bmatrix}_{[pulse]} \cdot i_{[k,pulse]} \right\} \qquad 7$$

$$[kU]_{[k,pulse]} \cdot u_{[k,pulse]} = [kI]_{[k,pulse]} \cdot R_s \cdot i_{[k,pulse]} + \frac{d}{dt}\left\{ [L]_{[k,pulse]} \cdot i_{[k,pulse]} \right\} \qquad 8$$

where $[L]_{[k,pulse]}$ are fictive inductances corresponding to a fictive machine which would run with same current on each phase when supplied with a three phase balanced voltage system. For the currents to be the same in this way, the geometry of the machine would have to change and so the fictive machine is not a real machine. Rather, these fictive inductances are a mathematical construct which, as shown below, allow the equations above to be solved.

Equation (8) can be solved for : $[L]_{[k,pulse]}$ at each current value.

From equations (2) and (3) the matrices of fictive inductances $[L]_{[k,pulse]}$ may be expressed as function of the unknown ($L_A$ and $L_B$) and various functions that are known from the sampled current and voltage values:

$$[L]_{[k,pulse]} = [kI]_{[k,pulse]} \cdot L_{ls} + [\beta]_{[k,pulse]} \cdot L_{A[k,pulse]} + [\gamma]_{[k,pulse]} \cdot L_{B[k,pulse]} \qquad 9$$

Or written in a contracted form:

$$\begin{bmatrix} L_{a[k]} \\ L_{b[k]} \\ L_{c[k]} \end{bmatrix}_{[pulse]} = \begin{bmatrix} k_{a[k]} & \beta_{a[k]} & \gamma_{a[k]} \\ k_{b[k]} & \beta_{b[k]} & \gamma_{b[k]} \\ k_{c[k]} & \beta_{c[k]} & \gamma_{c[k]} \end{bmatrix}_{[pulse]} \cdot \begin{bmatrix} L_{ls} \\ L_{A[k]} \\ L_{B[k]} \end{bmatrix}_{[pulse]} \qquad 10$$

where:

$$\begin{bmatrix} \beta_{a[k]} \\ \beta_{b[k]} \\ \beta_{c[k]} \end{bmatrix}_{[pulse]} = \begin{bmatrix} kI_{a[k]} - \dfrac{kI_{b[k]} + kI_{c[k]}}{2} \\ kI_{b[k]} - \dfrac{kI_{a[k]} + kI_{c[k]}}{2} \\ kI_{c[k]} - \dfrac{kI_{a[k]} + kI_{b[k]}}{2} \end{bmatrix}_{[pulse]} \qquad 11$$

$$\begin{bmatrix} \gamma_{a[k]} \\ \gamma_{b[k]} \\ \gamma_{c[k]} \end{bmatrix}_{[pulse]} = \begin{bmatrix} \dfrac{\sqrt{3} \cdot \left( kI_{c[k]} - kI_{b[k]} \right)}{2} \cdot \sin(2 \cdot \theta) - \left( kI_{a[k]} - \dfrac{kI_{b[k]} + kI_{c[k]}}{2} \right) \cdot \cos(2 \cdot \theta) \\ \dfrac{\sqrt{3} \cdot \left( kI_{b[k]} - kI_{a[k]} \right)}{2} \cdot \sin(2 \cdot \theta) - \left( kI_{c[k]} - \dfrac{kI_{b[k]} + kI_{a[k]}}{2} \right) \cdot \cos(2 \cdot \theta) \\ \dfrac{\sqrt{3} \cdot \left( kI_{a[k]} - kI_{c[k]} \right)}{2} \cdot \sin(2 \cdot \theta) - \left( kI_{b[k]} - \dfrac{kI_{a[k]} + kI_{c[k]}}{2} \right) \cdot \cos(2 \cdot \theta) \end{bmatrix}_{[pulse]} \qquad 12$$

The coefficients $[\beta]_{[k,pulse]}$, $[\gamma]_{[k,pulse]}$ are known as they are calculated from sampled phase currents and the estimated rotor position θ.

In equation (9) the leakage inductance is neglected otherwise the system (9) cannot be uniquely solved as it is derived from a three phase system.

With $[L]_{[k,pulse]}$ estimated at each sampling time (solution of equation (8)), $L_A$ and $L_B$ can now be calculated by using only two phases of a single pulse:

$$\begin{bmatrix} L_{[phase1,k,pulse]} \\ L_{[phase2,k,pulse]} \end{bmatrix} = \begin{bmatrix} \beta_{[phase1,k,pulses]} & \gamma_{[phase1,k,pulse]} \\ \beta_{[phase2,k,pulses]} & \gamma_{[phase2,k,pulse]} \end{bmatrix} \cdot \begin{bmatrix} L_{A[k,pulse]} \\ L_{B[k,pulse]} \end{bmatrix} \qquad 13$$

where *phase1 = a, b or c, phase2 = a, b or c.*

Thus:

$$L_{A[k,pulse]} = \frac{\gamma_{[phase1,k,pulses]} \cdot L_{[phase2,k,pulse]} - \gamma_{[phase2,k,pulses]} \cdot L_{[phase1,k,pulse]}}{\gamma_{[phase1,k,pulse]} \cdot \beta_{[phase2,k,pulses]} - \gamma_{[phase2,k,pulse]} \cdot \beta_{[phase1,k,pulses]}} \qquad 14$$

$$L_{B[k,pulse]} = \frac{\beta_{[phase1,k,pulses]} \cdot L_{[phase2,k,pulse]} - \beta_{[phase2,k,pulses]} \cdot L_{[phase1,k,pulse]}}{\gamma_{[phase2,k,pulse]} \cdot \beta_{[phase1,k,pulses]} - \gamma_{[phase1,k,pulse]} \cdot \beta_{[phase2,k,pulses]}}$$

15

And finally:

$$L_d\left(i_{d[k,pulse]}, i_{q[k,pulse]}\right) = \frac{3}{2} \cdot \left(L_{A[k,pulse]} - L_{B[k,pulse]}\right)$$

$$L_q\left(i_{d[k,pulse]}, i_{q[k,pulse]}\right) = \frac{3}{2} \cdot \left(L_{A[k,pulse]} + L_{B[k,pulse]}\right)$$

16

where $i_d$ and $i_q$ can be calculated from the sampled currents and the estimated rotor position θ.

Thus, the mathematical model enables the axis inductances $L_d$ and $L_q$ to be determined on the basis of the current and voltage data obtained in each instance of step 32 of the algorithm 30 described above.

The method described above can be used to determine the axis inductances on the basis of positive and negative pulses applied to a single phase of the synchronous motor. This phase could be selected arbitrarily. Alternatively, the phase could be selected based on the position of the rotor. In embodiments in which data is obtained from positive and negative pulses to more than one phase of the synchronous motor (typically all phases of the synchronous motor), it is possible to select one phase on which to perform the calculations and, if desired, to repeat the calculations on the basis of different phase selection.

The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the spirit and scope of the invention.

**Claims**

1. A method comprising:

   applying a plurality of voltage pulses to a synchronous motor;
   taking a plurality of current and voltage samples in at least two phases of the motor in response to the application of each voltage pulse;
   using the plurality of current and voltage samples to generate mathematical expressions for average inductance and variable inductance of the synchronous motor as functions of d-axis and q-axis currents; and
   using the generated mathematical expressions for average inductance and variable inductance of the synchronous motor to generate mathematical expressions for d-axis inductance and q-axis inductance of the synchronous motor as functions of d-axis and q-axis currents.

2. A method as claimed in claim 1, wherein the mathematical expressions for average inductance and variable inductance of the synchronous motor are generated from the current and voltage samples and from mathematical models of self-inductance and mutual-inductance in electric motors.

3. A method as claimed in claim 1 or claim 2, wherein the mathematical expressions for average inductance and variable inductance of the synchronous motor define an equivalent machine in which the same current exists in all phases of the equivalent machine at all times.

4. A method as claimed in claim 3, wherein the equivalent machine has fictive inductances that can be expressed in terms of the average inductance and variable inductance of the synchronous motor as functions of d-axis and q-axis currents and terms that can be determined from the current and voltage samples.

5. A method as claimed in claim 4, further comprising estimating a value for the fictive inductance at each sampling time such that estimates for the average inductance and the variable inductance of the synchronous motor can be calculated from current and voltage samples of a positive voltage pulse and a negative voltage pulse applied in an arbitrary rotor angle of the synchronous motor.

6. A method as claimed in any preceding claim, wherein the synchronous motor includes a rotor, the method further comprising applying the voltage pulses such that a rotor of the synchronous motor does not rotate.

7. A method as claimed in any preceding claim, wherein the plurality of voltage pulses comprises one or more positive measuring pulses and one or more negative measuring pulses.

8. A method as claimed in claim 7, wherein multiple voltage and current samples are taken for each positive measuring pulse applied and for each negative measuring pulse applied.

9. A method as claimed in claim 7 or claim 8, wherein the mathematical expressions for average inductance and variable inductance of the synchronous motor are generated using average responses as a result of applying positive and negative measuring pulses to a defined phase of the motor.

10. A method as claimed in claim 9, wherein the defined phase is selected arbitrarily.

11. A method as claimed in claim 9, wherein the defined phase is selected based on the position of the rotor of the synchronous motor.

12. A method as claimed in any preceding claim, further comprising determining rotor position for the synchronous machine on the basis of current and voltage samples obtained for all phases of the synchronous motor.

13. A method as claimed in any preceding claim, wherein, following the application of a voltage pulse to the motor, a cancelling pulse having an opposite sign to the applied voltage pulse is applied.

14. A method as claimed in claim 13, wherein, following the application of a voltage pulse and a cancelling pulse, there is a short delay before another pulse is applied to the motor.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

**Application Number**

EP 13 00 0278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 544 360 A2 (LSIS CO LTD [KR]) 9 January 2013 (2013-01-09) * abstract * * figure 1 * ----- | 1-14 | INV. H02P21/06 |
| A | DE 10 2011 056493 A1 (ZF LENKSYSTEME GMBH [DE]) 16 August 2012 (2012-08-16) * abstract * * figures 1, 5, 7, 8 * ----- | 1-14 | |
| A | JP 2012 120320 A (TOSHIBA CORP) 21 June 2012 (2012-06-21) * figures 1, 2 * ----- | 1-14 | |

**TECHNICAL FIELDS SEARCHED (IPC)**

H02P

The present search report has been drawn up for all claims

| Place of search | Date of completion of the search | Examiner |
|---|---|---|
| Munich | 12 June 2013 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 00 0278

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2013

| Patent document cited in search report | | Publication date | Patent family member(s) | | Publication date |
|---|---|---|---|---|---|
| EP 2544360 | A2 | 09-01-2013 | CN | 102868339 A | 09-01-2013 |
| | | | EP | 2544360 A2 | 09-01-2013 |
| | | | JP | 2013017384 A | 24-01-2013 |
| | | | KR | 20130005190 A | 15-01-2013 |
| | | | US | 2013009575 A1 | 10-01-2013 |
| DE 102011056493 | A1 | 16-08-2012 | NONE | | |
| JP 2012120320 | A | 21-06-2012 | NONE | | |

EPO FORM P0459

For more details about this annex : see Official Journal of the European Patent Office, No. 12/82